# EUROPEAN PATENT APPLICATION

(11) **EP 4 819 721 A1**
(43) Date of publication of application: **07.10.2026**
(21) Application number: 24898251.4
(22) Date of filing: 02.12.2024
(51) Int. Cl.: H04W 72/0446, H04L 1/1812, H04L 1/1829, H04W 72/25, H04W 72/1263, H04L 5/00, H04W 92/18

(54) **METHOD AND APPARATUS FOR PERFORMING MULTIPLE CONSECUTIVE SLOT TRANSMISSIONS**

(30) Priority: 30.11.2023 US 202363604208 P
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2024/019438
(87) International publication number: WO 2025/116659

(57) **Abstract**

Provided are a method by which a first device performs wireless communication and an apparatus supporting same. The method may comprise the steps of: transmitting first data to a second device on the basis of a first slot from among slots for multiple consecutive slot transmissions; receiving a positive acknowledgement (ACK) for the first data from the second device; and on the basis of the positive ACK for the first data, flushing a hybrid automatic repeat request (HARQ) buffer of a sidelink process related to the first data, except that at least one slot for the first data remains from among the slots for the multiple consecutive slot transmissions.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

In one embodiment, provided is a non-transitory computer-readable storage medium recording instructions. For example, the instructions, based on being executed, cause a first device to perform operations comprising: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows an example of a wireless communication system supporting an unlicensed band, based on an embodiment of the present disclosure.
FIG. 10 shows a method of occupying resources in an unlicensed band, based on an embodiment of the present disclosure.
FIG. 11 shows a case in which plurality of LBT-SBs are included in an unlicensed band, based on an embodiment of the present disclosure.
FIG. 12 shows CAP operations performed by a base station to transmit a downlink signal through an unlicensed band, based on an embodiment of the present disclosure.
FIG. 13 shows type 1 CAP operations performed by a UE to transmit an uplink signal, based on an embodiment of the present disclosure.
FIG. 14 shows a channel access procedure, based on an embodiment of the present disclosure.
FIG. 15 shows a retransmission operation/HARQ buffer management operation/sidelink grant management operation based on reception of HARQ feedback of a UE when transmitting an MCSt-based SL TB, according to an embodiment of the present disclosure.
FIG. 16 shows an operation of managing a HARQ buffer and a grant related to an SL TB when receiving HARQ feedback for MCSt-based SL TB transmission, according to an embodiment of the present disclosure.
FIG. 17 shows an operation of managing a HARQ buffer and a grant related to an SL TB when receiving HARQ feedback for MCSt-based SL TB transmission, according to an embodiment of the present disclosure.
FIG. 18 shows a retransmission operation/HARQ buffer management operation/sidelink grant management operation based on reception of HARQ feedback of a UE when transmitting an MCSt-based SL TB, according to an embodiment of the present disclosure.
FIG. 19 shows a retransmission operation/HARQ buffer management operation/sidelink grant management operation based on reception of HARQ feedback of a UE when transmitting an MCSt-based SL TB, according to an embodiment of the present disclosure.
FIG. 20 shows a method for performing wireless communication by a first device, based on an embodiment of the present disclosure.
FIG. 21 shows a method for performing wireless communication by a second device, based on an embodiment of the present disclosure.
FIG. 22 shows a communication system 1, based on an embodiment of the present disclosure.
FIG. 23 shows wireless devices, based on an embodiment of the present disclosure.
FIG. 24 shows a signal process circuit for a transmission signal, based on an embodiment of the present disclosure.
FIG. 25 shows another example of a wireless device, based on an embodiment of the present disclosure.
FIG. 26 shows a hand-held device, based on an embodiment of the present disclosure.
FIG. 27 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

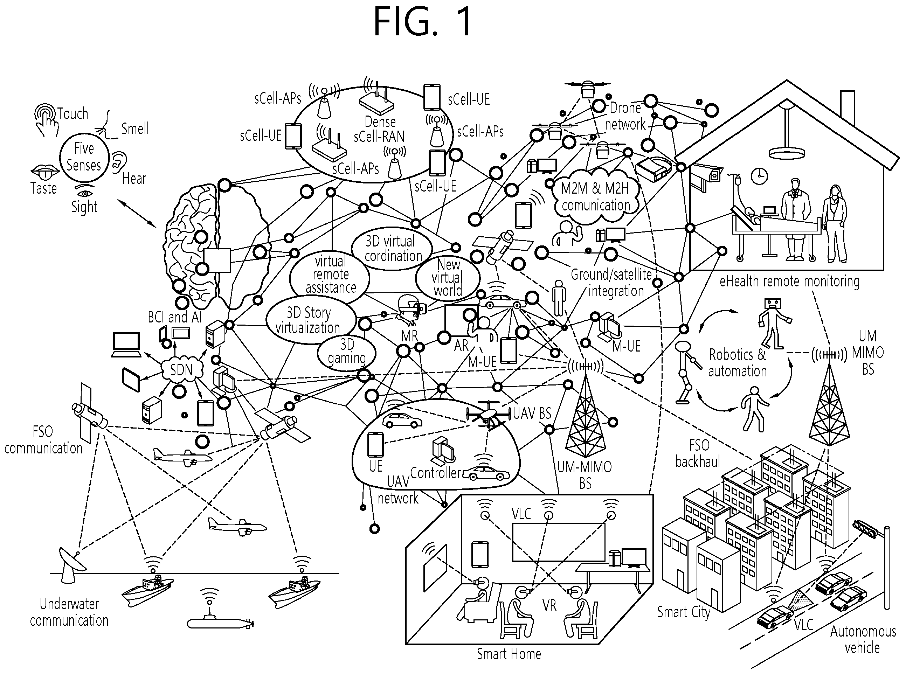

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

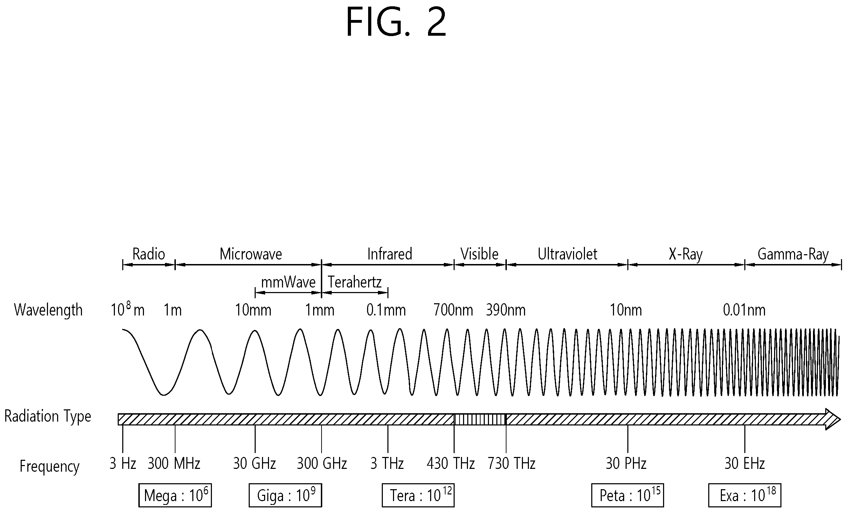

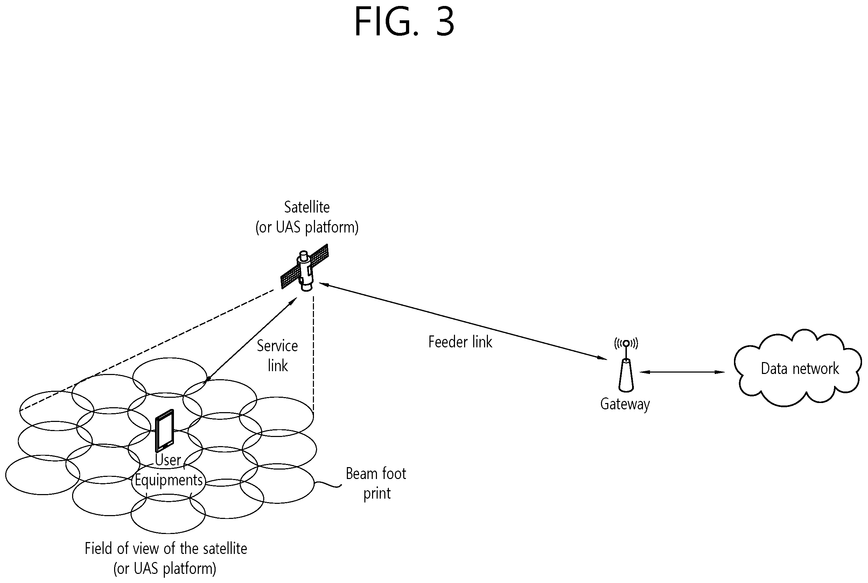

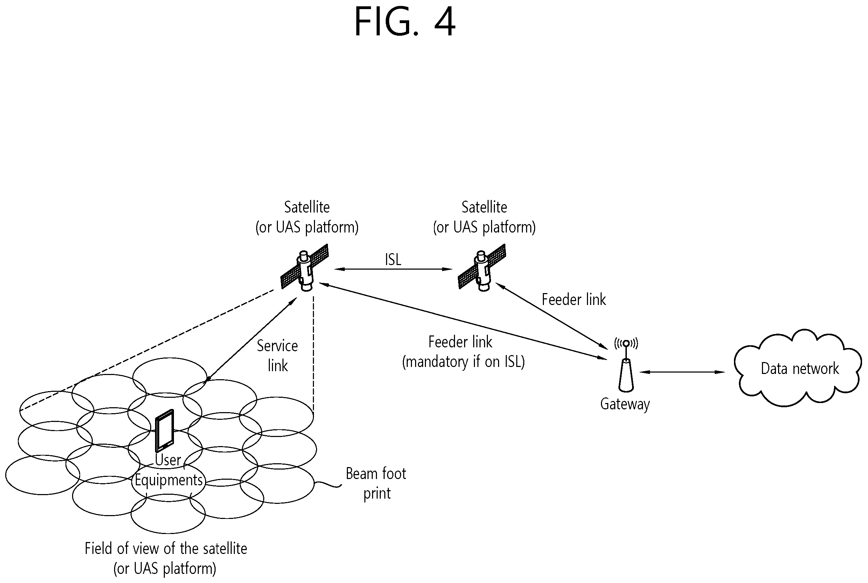

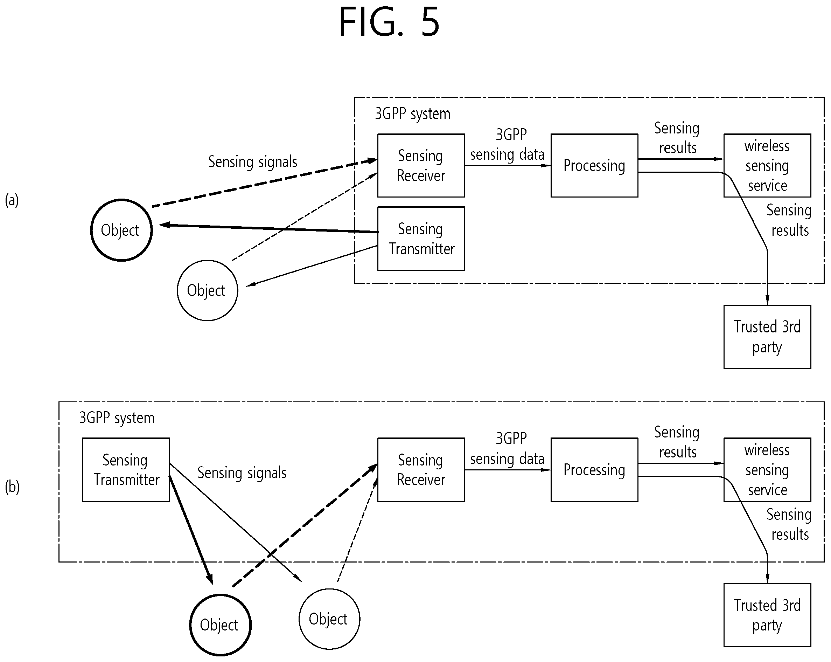

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Beamforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 5 shows an example of a sensing operation, based on an embodiment of the present disclosure. The embodiment of FIG. 5 may be combined with various embodiments of the present disclosure. Specifically, (a) of FIG. 5 illustrates an example of sensing using a sensing receiver and a sensing transmitter at the same location (e.g., monostatic sensing), and (b) of FIG. 5 illustrates an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| | 15kHz (u=0) | 14 | 10 | 1 |
| | 30kHz (u=1) | 14 | 20 | 2 |
| normal CP | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

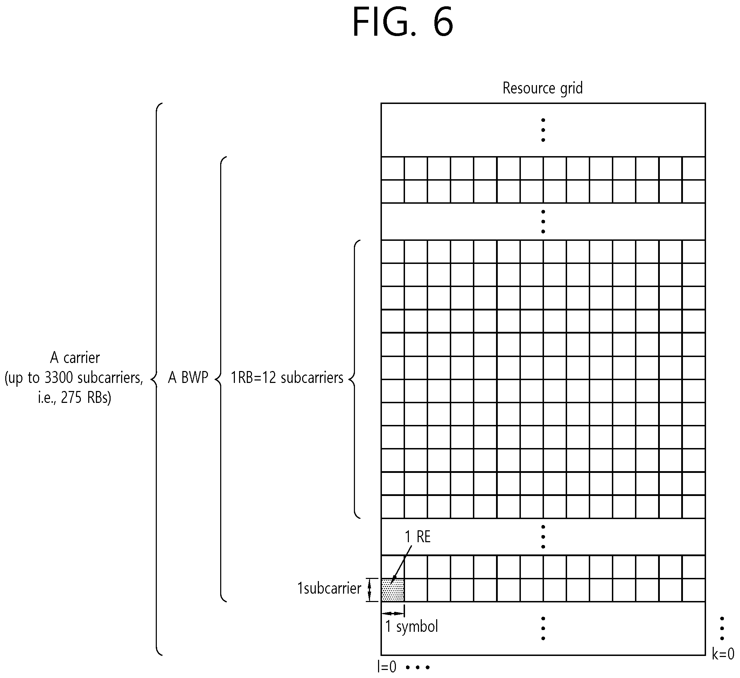

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier.

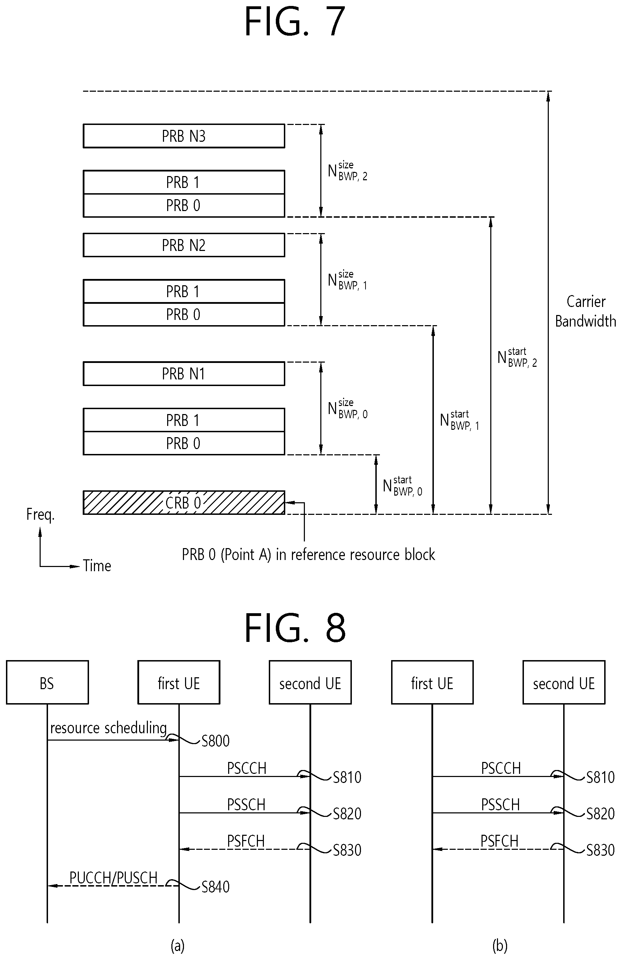

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL) -specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to the sidelink, a physical control channel related to the sidelink, etc. In the present disclosure, PSSCH may be replaced with a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in the resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a wireless communication system supporting an unlicensed band/shared spectrum will be described.

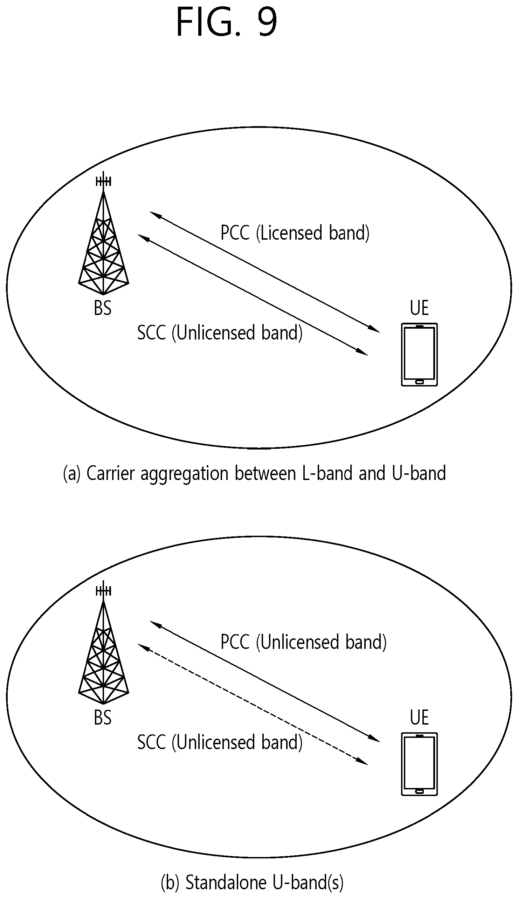

FIG. 9 shows an example of a wireless communication system supporting an unlicensed band, based on an embodiment of the present disclosure. For example, FIG. 9 may include an unlicensed spectrum (NR-U) wireless communication system. The embodiment of FIG. 9 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 9, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 9. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 9, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 us. The base station or the UE senses a channel during a sensing slot duration. If power detected for at least 4 us within the sensing slot duration is less than an energy detection threshold Xₜₕᵣₑₛₕ, the sensing slot duration Tsl is considered to be idle. Otherwise, the sensing slot duration Tsl = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

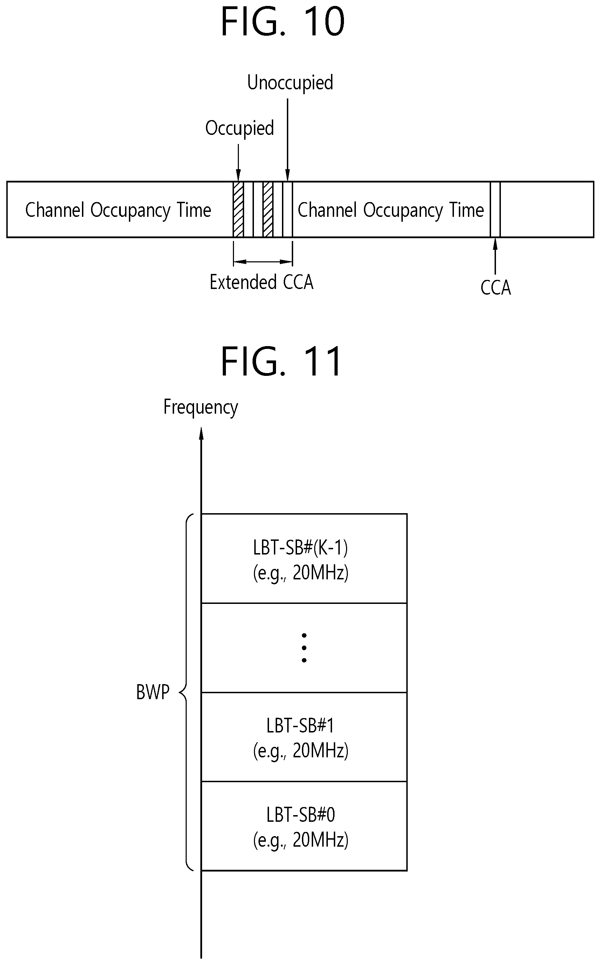

FIG. 10 shows a method of occupying resources in an unlicensed band, based on an embodiment of the present disclosure. The embodiment of FIG. 10 may be combined with various embodiments of the present disclosure.

Referring to FIG. 10, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 3 shows an example of the channel access procedure (CAP) supported in NR-U.

**[Table 3]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 3, the LBT type or CAP for DL/UL/SL transmission may be defined. However, Table 3 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 11 shows a case in which a plurality of LBT-SBs are included in an unlicensed band, based on an embodiment of the present disclosure. The embodiment of FIG. 11 may be combined with various embodiments of the present disclosure.

Referring to FIG. 11, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 4 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 4]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

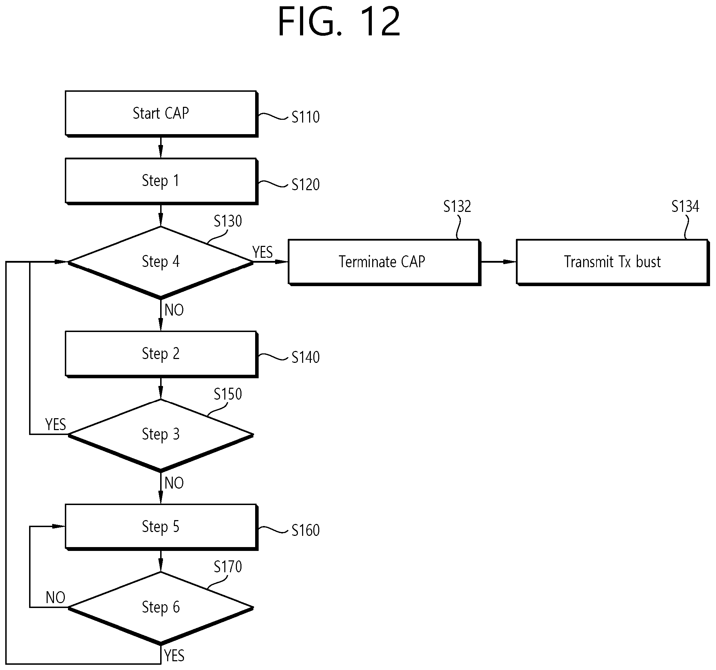

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration Td. Then, if a counter N is zero, the base station may perform transmission (S134). In this case, the base station may adjust the counter N by sensing the channel for additional sensing slot duration(s) according to the following steps:

Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration T_{d} or all the slots of the additional defer duration T_{d} are detected to be idle.

Step 6) (S170) If the channel is sensed to be idle for all the slot durations of the additional defer duration Td (Y), step 4 proceeds. Otherwise (N), step 5 proceeds.

Table 5 shows that mₚ, a minimum contention window (CW), a maximum CW, a maximum channel occupancy time (MCOT), and an allowed CW size, which are applied to the CAP, vary depending on channel access priority classes.

**[Table 5]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 5, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

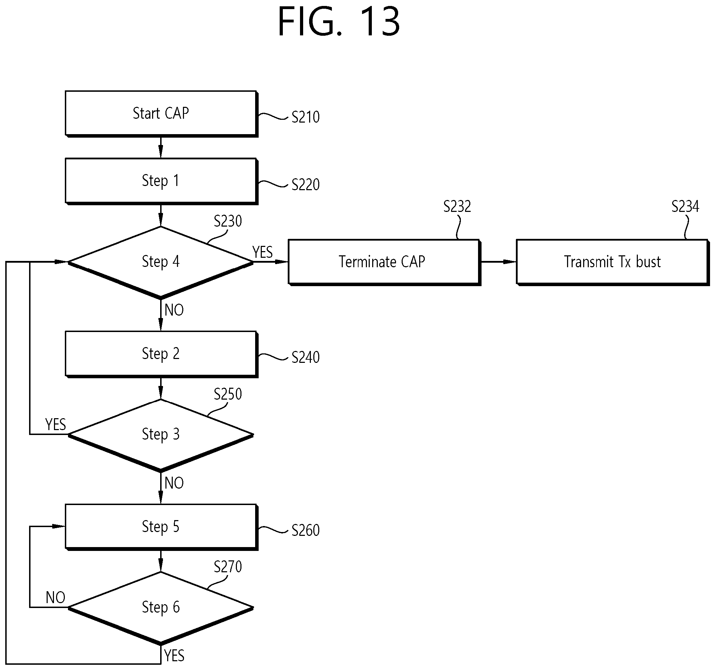

FIG. 13 shows type 1 CAP operations performed by a UE to transmit an uplink signal, based on an embodiment of the present disclosure. The embodiment of FIG. 13 may be combined with various embodiments of the present disclosure.

Referring to FIG. 13, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:

Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration T_{d} or all the slots of the additional defer duration T_{d} are detected to be idle.

Step 6) (S270) If the channel is sensed to be idle for all the slot durations of the additional defer duration Td (Y), step 4 proceeds. Otherwise (N), step 5 proceeds.

Table 6 shows that mₚ, a minimum CW, a maximum CW, a maximum channel occupancy time (MCOT), and an allowed CW size, which are applied to the CAP, vary depending on channel access priority classes.

**[Table 6]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 6, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration Td is configured in the following order: duration T_{f} (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CAPC (e.g., minimum contention window size, maximum contention window size, mₚ, etc.). For example, the UE may select a backoff counter (BC) after selecting a random value between 0 and CW (e.g., the minimum CW and the maximum CW mapped to the CAPC). In this case, for example, the BC may be a positive integer less than or equal to the random value. The UE that senses a channel decrements BC by 1 when the channel is idle. When the BC becomes zero and the UE detects that the channel is idle for the time T_{d} (T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f} (= 16 usec) may be configured to be Tₛₗ. For example, mₚ may be a constant mapped per CAPC, and may be used for calculation of T_{d}. For example, a smaller value may be mapped for mₚ as the CAPC value is lower (or as the priority is higher).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

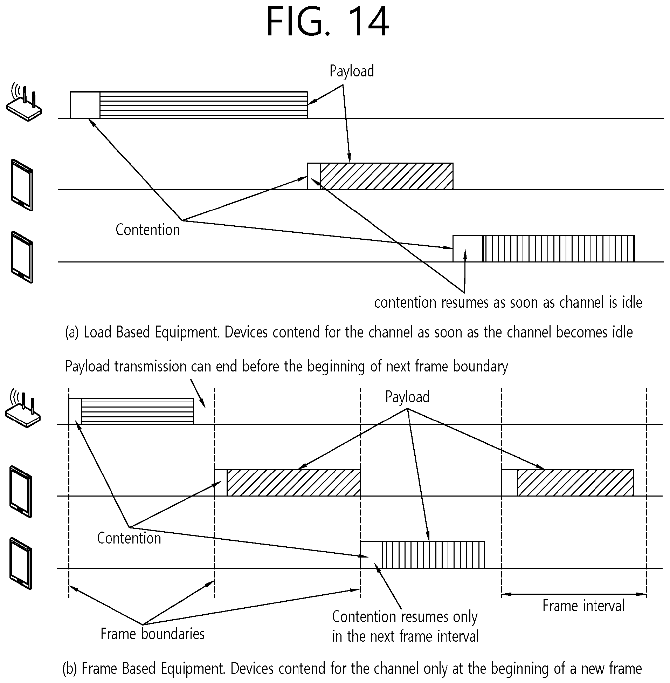

FIG. 14 shows a channel access procedure, based on an embodiment of the present disclosure. Specifically, (a) of FIG. 14 shows an example of a dynamic channel access procedure (load based equipment, LBE), and (b) of FIG. 14 shows an example of a semi-static channel access procedure (frame based equipment, FBE). The embodiment of FIG. 14 may be combined with various embodiments of the present disclosure.

Referring to (a) of FIG. 14, if a channel is idle, the UE may perform contention with other UEs on an unlicensed band to immediately occupy the channel. In addition, if the UE occupies the channel, the UE may transmit data.

Referring to (b) of FIG. 14, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins. Within the FFP, a type 2 category LBT operation may be performed (e.g., performing LBT without performing random backoff-based LBT and sensing the channel for a fixed short time, and performing data transmission when the channel is idle).

Meanwhile, in sidelink-unlicensed band (SL-U), the UE should first occupy a channel of the sidelink unlicensed band in order to transmit SL data. For example, in order to occupy the channel of the sidelink unlicensed band, the UE may perform listen before talk (LBT) (e.g., type 1 LBT: random backoff based LBT) to perform a procedure of finding a channel of the unlicensed band that is not occupied by other UEs. For example, when the UE performing LBT finds a channel that is not occupied by other UEs, the UE may occupy the corresponding channel and perform SL data transmission. For example, when the UE fails in the LBT procedure, the UE may adjust a parameter value for (re-)performing LBT (e.g., adjusting a size of a contention window) to perform LBT again, and may continuously perform the procedure of finding a channel of the unlicensed band that is not occupied by the UE.

For example, in SL-U, a transmission UE performing sidelink communication may perform an LBT operation in order to occupy a channel of an unlicensed band. For example, when the UE succeeds in LBT, the UE may transmit a packet on the occupied channel. For example, when the UE fails in LBT (e.g., when a result that the channel is busy is derived based on performing sensing during a sensing slot duration by the UE), since the UE does not occupy the channel of the unlicensed band, the UE may not perform sidelink transmission. Additionally, for example, when a medium access control (MAC) layer of the transmission UE detects an SL LBT failure during performing the LBT operation in order to occupy the channel of the unlicensed band, the MAC layer may receive an indication of the SL LBT failure event from a physical (PHY) layer.

Meanwhile, in SL-U, the UE may perform an operation based on an SL LBT failure event as follows.

For example, the UE may receive configuration of the following parameters for SL LBT failure management from a base station, and may perform an SL LBT failure recovery operation or an SL LBT failure declaration operation.
- sl-lbt-FailureInstanceMaxCount: when the UE detects SL LBT failure, the UE may increase an SL_LBT_COUNTER by 1, and when the UE detects SL LBT failure as many as sl-lbt-FailureInstanceMaxCount until sl-lbt-FailureDetectionTimer expires, the UE may declare SL LBT failure.
- sl-lbt-FailureDetectionTimer: a timer that is started when SL LBT failure is detected, and while the timer is running, the UE may perform an SL LBT failure recovery process.

For example, when a MAC layer of a transmission UE receives an SL LBT failure event from a PHY layer (e.g., when the UE detects SL LBT failure), the MAC layer may start an sl-lbt-FailureDetectionTimer timer and may simultaneously increase an SL_LBT_COUNTER by 1. Additionally, for example, the UE may perform an SL LBT recovery process while the sl-lbt-FailureDetectionTimer timer is running. For example, when the UE detects SL LBT failure again while the sl-lbt-FailureDetectionTimer timer is running, the UE may increase the SL_LBT_COUNTER by 1. For example, when the SL_LBT_COUNTER increased due to detection of SL LBT failure does not reach a threshold count (sl-lbt-FailureInstanceMaxCount) until the sl-lbt-FailureDetectionTimer timer expires, the UE may consider that the SL LBT failure is recovered, and may continuously perform normal sidelink communication using a sidelink grant being used.

However, for example, when the SL_LBT_COUNTER increased due to detection of SL LBT failure reaches a threshold count (sl-lbt-FailureInstanceMaxCount) until the sl-lbt-FailureDetectionTimer timer expires, the UE may consider that the SL LBT failure is not recovered, and may declare a consistent SL LBT failure. Additionally, for example, when SL LBT failure is not recovered until the sl-lbt-FailureDetectionTimer timer expires, the transmission UE may declare SL LBT failure.

Meanwhile, the UE may perform the following resource (re-)selection procedure during an operation based on multiple consecutive slots transmission (MCSt) (e.g., an operation of the UE when MCSt resources are allocated).

For reference, for example, MCSt may refer to allocating consecutive sidelink (SL) slots within a predetermined gap as transmission resources for sidelink transmission, and the UE may transmit the same sidelink transport block (TB) (e.g., single TB) or a plurality of sidelink TBs (e.g., multiple TBs) using multiple consecutive slots.

Additionally, for example, the UE may perform LBT in a first slot, and may transmit a sidelink TB without performing LBT for the sidelink TB transmitted through consecutively subsequent slots (e.g., consecutive slots within a certain gap).

For example, when performing MCSt-based sidelink transmission, since sidelink data may be transmitted without performing LBT during a gap between consecutive slots for sidelink transmission, overhead (e.g., performing LBT) of a transmission operation in a sidelink unlicensed band may be reduced.

Meanwhile, in prior art, a resource selected by the UE for sidelink TB transmission in a resource pool in which PSFCH is configured should maintain a minimum time gap between two resources (e.g., a certain gap should be maintained between PSSCH and a PSFCH related to the PSSCH, and a certain gap should be maintained between the PSFCH related to the PSSCH and a next PSSCH resource, or a certain gap between two resources (e.g., between PSSCH and PSSCH)).

Meanwhile, according to prior art, when PSFCH received for PSSCH transmission is a positive ACK, a HARQ buffer may be flushed, and a grant may be cleared. And, a PSFCH resource may be configured in a resource pool only when transmitting a plurality of MAC PDU (or a multiple TBs) based on MCSt. However, in this case, the following problem may occur.

For example, when multiple consecutive slots are configured to perform MCSt-based transmission for a plurality of MAC PDU (or multiple TBs) (e.g., one or more slots are configured for each of the plurality of MAC PDU, and the configured slots are consecutive to each other (e.g., when a gap between consecutive slots is 16usec or less)), when HARQ feedback (positive ACK) for any one of the plurality of MAC PDU transmitted based on any one slot among the multiple consecutive slots is received, even if a slot for the MAC PDU remains among the multiple consecutive slots, a HARQ buffer may be flushed and a grant may be cleared according to the described above prior art. In this case, a problem may occur in that transmission of MAC PDU except for the MAC PDU for which the positive ACK is received among the plurality of MAC PDU may no longer be performed based on MCSt. Alternatively, for example, when a HARQ buffer is flushed or a grant is cleared based on reception of a positive ACK before using all of multiple consecutive slots for MCSt, since an interval between the multiple consecutive slots exceeds 16usec, a problem may occur in that an MCSt structure may no longer be maintained. Alternatively, for example, when a UE configures an MCSt structure to transmit a plurality of MAC PDU in an unlicensed band by performing only one type 1 LBT, when a HARQ buffer related to the MAC PDU is flushed or a grant is cleared due to reception of a positive ACK for any one of the transmitted MAC PDU, since the UE should perform resource selection again, perform type 1 LBT again, or configure an MCSt structure again in order to transmit other MAC PDU that are scheduled to be transmitted based on the MCSt structure, overhead of the UE may increase, and efficiency related to use of transmission resources in the unlicensed band may decrease.

In the present disclosure, a method for performing a retransmission operation/HARQ buffer management operation/sidelink grant management operation based on reception of HARQ feedback of a UE when transmitting an SL TB using MCSt resources (e.g., transmission of multiple TBs or transmission of a single TB), and a device supporting the same are proposed as follows.

As in the following embodiment(s), when the UE performs MCSt-based SL TB transmission composed of four consecutive slots (when the number of consecutive slots for MCSt is "4") (e.g., performing four transmissions (initial transmission and retransmission) in four slots for one SL TB), when HARQ feedback (e.g., positive ACK) is received in transmission(s) of the four consecutive slots, the UE may perform the following operation.

For reference, according to prior art, when the UE performs MCSt-based SL TB transmission composed of four consecutive slots (when the number of consecutive slots for MCSt is "4") (e.g., performing four transmissions (initial transmission and retransmission) in four slots for one SL TB), when feedback (e.g., positive ACK) is received for transmission of a first slot of MCSt, the UE may transmit retransmission packets in the remaining three slots so that MCSt resources are not wasted.

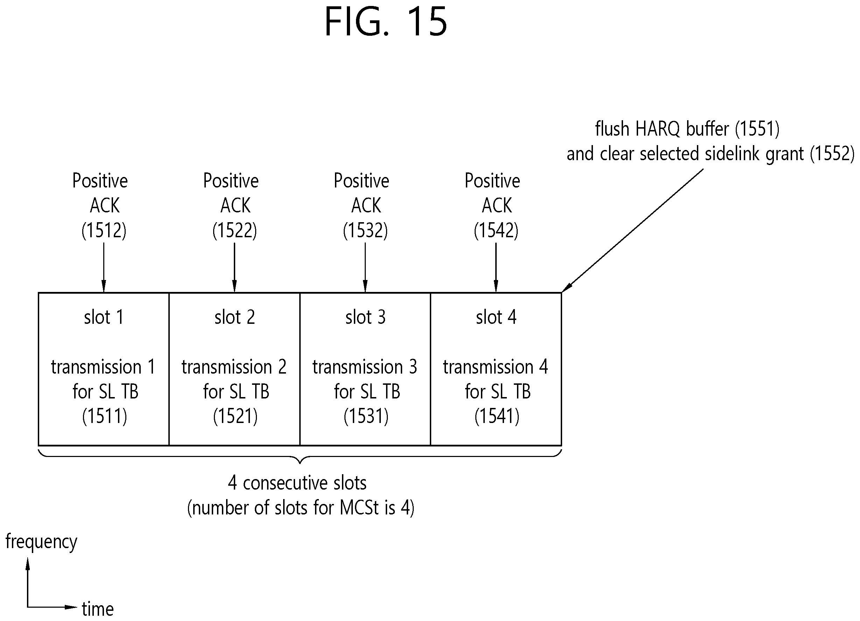

Hereinafter, embodiments of FIG. 15 to FIG. 19 show an operation of the UE proposed in the present disclosure.

FIG. 15 shows a retransmission operation/HARQ buffer management operation/sidelink grant management operation based on reception of HARQ feedback of a UE when transmitting an MCSt-based SL TB, according to an embodiment of the present disclosure. The embodiment of FIG. 15 may be combined with various embodiments of the present disclosure.

Referring to FIG. 15, when the UE performs MCSt-based SL TB transmission composed of four consecutive slots (when the number of consecutive slots for MCSt is "4") (e.g., performing four transmissions (initial transmission and retransmission) in four slots for one SL TB), when HARQ feedback (e.g., positive ACK) 1512 is received for transmission of a first slot 1511 of MCSt, the UE may transmit a retransmission packet 1521 in a next second slot. And, when HARQ feedback (e.g., positive ACK) 1522 is received for the second slot transmission 1521, the UE may transmit a retransmission packet 1531 in a next third slot. And, when HARQ feedback (e.g., positive ACK) 1532 is received for the third slot transmission 1531, the UE may transmit a retransmission packet 1541 in a next fourth slot. And, when HARQ feedback (e.g., positive ACK) 1542 is received for the fourth slot transmission 1541, the UE may flush 1551 a HARQ buffer related to a sidelink process for SL TB transmission using the MCSt resource, and may perform an operation of clearing 1552 a sidelink grant generated for the SL TB transmission.

For example, although the UE transmits an SL TB to a counterpart UE in each slot among four consecutive slots for multiple consecutive slots transmission (MCSt) and receives a positive ACK from the counterpart UE, if a slot for the SL TB remains among slots for MCSt after the positive ACK received by the UE (e.g., in each case in which positive ACK 1512, 1522, 1532 are received in the embodiment of FIG. 15), the UE may not flush a HARQ buffer related to a sidelink process for transmitting the SL TB, and may not clear a sidelink grant generated to transmit the SL TB. And, for example, when no slot for the SL TB remains among slots for MCSt after the positive ACK received by the UE from the counterpart UE (e.g., when positive ACK 1542 is received in the embodiment of FIG. 15), the UE may flush a HARQ buffer related to a sidelink process for transmitting the SL TB, and may clear a sidelink grant generated to transmit the SL TB.

Additionally, since a resource pool in which a PSFCH resource for receiving HARQ feedback is configured may be configured only when transmitting multiple TBs based on MCSt, the above-described embodiment related to transmission of the SL TB may be interpreted as an embodiment related to transmission of multiple TBs.

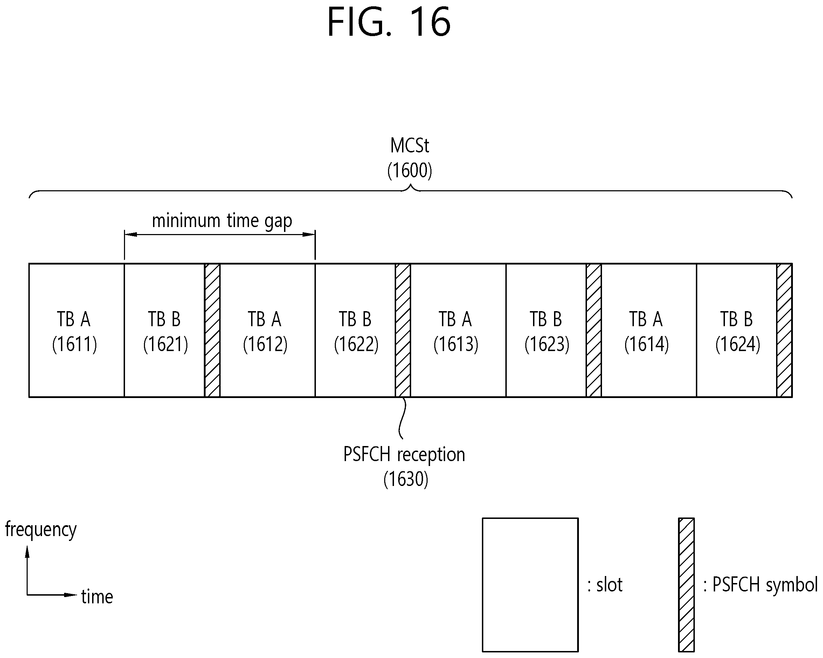

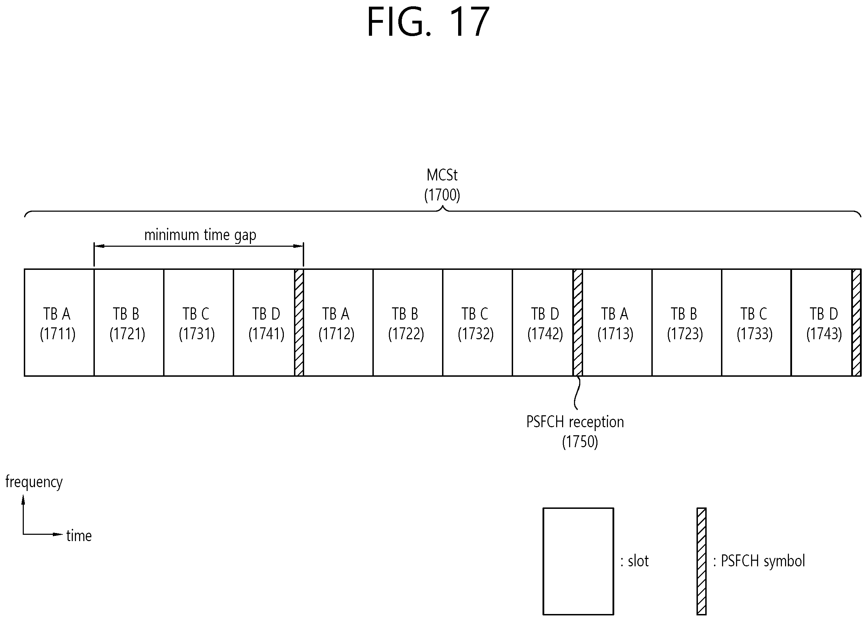

Specifically, the above-described embodiment of FIG. 15 may be as follows (see FIG. 16 and FIG. 17).

FIG. 16 shows an operation of managing a HARQ buffer and a grant related to an SL TB when receiving HARQ feedback for MCSt-based SL TB transmission, according to an embodiment of the present disclosure. The embodiment of FIG. 16 may be combined with various embodiments of the present disclosure.

Referring to FIG. 16, in order to transmit a plurality of SL TBs (TB A and TB B in FIG. 16) based on MCSt, an MCSt resource 1600 composed of eight consecutive slots may be configured for a transmission UE. For example, four slots 1611, 1612, 1613, and 1614 may be configured for transmission of TB A among the MCSt resources, and four slots 1621, 1622, 1623, and 1624 may be configured for transmission of TB B. Meanwhile, the transmission UE may obtain configuration information related to a resource pool in which a PSFCH resource is configured (e.g., SL-ResourcePool) based on an RRC message. For example, the configuration information related to the resource pool may include PSFCH resource configuration information (e.g., SL-PSFCH-Config), and the PSFCH resource configuration information may include information related to a configuration periodicity of the PSFCH resource (e.g., sl-PSFCH-Period) and information related to a minimum time gap between PSSCH and PSFCH (e.g., sl-MinTimeGapPSFCH).

Meanwhile, for example, the transmission UE may perform LBT (type 1 LBT) on a first slot 1611 among the MCSt resources to occupy an idle channel and may transmit TB A to a counterpart UE (and, the UE may perform transmission by performing only type 2 LBT on slots after the first slot). For example, when the counterpart UE succeeds in decoding TB A transmitted on the first slot 1611, the counterpart UE may transfer HARQ feedback (positive ACK) for TB A transmitted on the first slot 1611 to the transmission UE. In this case, for example, when a PSFCH resource is configured every two slots (e.g., sl-PSFCH-Period: 2), and a minimum time gap between PSSCH and PSFCH is configured as two slots (e.g., sl-MinTimeGapPSFCH: 2), the transmission UE may receive HARQ feedback (positive ACK) 1630 for TB A transmitted on the first slot 1611 based on a PSFCH resource included in a fourth slot 1622, which is the earliest slot among slots including a PSFCH resource after two slots from the first slot 1611, not a second slot 1621 including a PSFCH resource among the MCSt resources 1600. For example, the transmission UE may determine whether slot(s) for TB A remain after HARQ feedback (positive ACK) 1630 for TB A is received among the MCSt resources 1600 composed of the eight slots. For example, when slot(s) for TB A remain (1613 and 1614) after HARQ feedback (positive ACK) 1630 for TB A is received among the MCSt resources 1600 composed of the eight slots, the UE may not flush a HARQ buffer related to an SL process for transmission of TB A. And, for example, the UE may not clear a grant for transmission of TB A.

For example, if a HARQ buffer related to an SL process for transmission of TB A is flushed or a grant for transmission of TB A is cleared even though slot(s) for TB A remain 1613 and 1614 after HARQ feedback (positive ACK) 1630 for TB A transmitted on the first slot 1611 is received, a structure of the MCSt resource 1600 composed of the eight consecutive slots may not be maintained. For example, when a HARQ buffer related to transmission of any one among a plurality of TBs is flushed or a grant is cleared, since a gap between consecutive slots for MCSt exceeds 16usec, a structure of MCSt may no longer be maintained (e.g., in order to perform transmission for remaining TBs, LBT (type 1 LBT) should be performed again first). Therefore, as described above, when the transmission UE determines that slot(s) for TB A remain 1613 and 1614 after HARQ feedback (positive ACK) 1630 for TB A is received among the MCSt resources 1600 composed of the eight slots, the UE may not flush a HARQ buffer related to an SL process for transmission of TB A, and may not clear a grant for transmission of TB A.

Meanwhile, the transmission UE may perform retransmission for TB A in a fifth slot 1613 after receiving the HARQ feedback (positive ACK) 1630. For example, when the counterpart UE succeeds in decoding TB A transmitted on the fifth slot 1613, the counterpart UE may transfer HARQ feedback (positive ACK) for TB A transmitted on the fifth slot 1613 to the transmission UE. In this case, as described above, HARQ feedback (positive ACK) for TB A transmitted on the fifth slot 1613 may be received based on a PSFCH resource included in an eighth slot 1624, which is the earliest slot among slots including a PSFCH resource after two slots from the fifth slot. In this case, as described above, the transmission UE may determine whether slot(s) for TB A remain after HARQ feedback (positive ACK) for TB A is received among the MCSt resources 1600 composed of the eight slots. For example, when no slot for TB A remains after HARQ feedback (positive ACK) for TB A transmitted on the fifth slot 1613 is received among the MCSt resources 1600 composed of the eight slots, the transmission UE may flush a HARQ buffer related to an SL process for transmission of TB A, and may clear a grant for transmission of TB A. In summary, when the transmission UE receives a positive ACK for a TB transmitted on any one slot among consecutive slots for MCSt, except for a case in which slot(s) for the TB remain among the consecutive slots for MCSt, the UE may flush a HARQ buffer related to an SL process for transmission of the TB, and may also clear a grant for transmission of the TB.

Meanwhile, for example, unlike described above, the transmission UE may transmit TB A on a first slot 1611 among the MCSt resources, and may transmit TB B on a second slot 1621. And, for example, HARQ feedback (positive ACK) for TB A transmitted on the first slot 1611 may be received based on a PSFCH resource included in a fourth slot 1622, which is the earliest slot among slots including a PSFCH resource after two slots from the first slot 1611. And, for example, HARQ feedback (positive ACK) for TB B transmitted on the second slot 1621 may be received based on a PSFCH resource included in a sixth slot 1623, which is the earliest slot among slots including a PSFCH resource after two slots from the second slot 1621. In this case, for example, the transmission UE may determine that transmission for TBs (TB A and TB B) to be transmitted based on MCSt is all successful. Therefore, for example, even though a slot 1614 for TB A and a slot 1624 for TB B remain after the fourth slot 1622 including a PSFCH resource in which a positive ACK for TB A is received and the sixth slot 1623 including a PSFCH resource in which a positive ACK for TB B is received, the transmission UE may flush a HARQ buffer related to an SL process for transmission of TB A and a HARQ buffer related to an SL process for transmission of TB B, and may clear a grant for transmission of TB A and a grant for transmission of TB B. In this case, for example, unlike described above, since both TB A and TB B transmitted based on MCSt are successfully received and thus the MCSt structure does not need to be maintained any longer, the UE may flush a HARQ buffer or clear a grant even though slots remain in the MCSt resource.

FIG. 17 shows an operation of managing a HARQ buffer and a grant related to an SL TB when receiving HARQ feedback for MCSt-based SL TB transmission, according to an embodiment of the present disclosure. The embodiment of FIG. 17 may be combined with various embodiments of the present disclosure.

Referring to FIG. 17, in order to transmit a plurality of SL TBs (TB A, TB B, TB C, and TB D in FIG. 17) based on MCSt, an MCSt resource 1700 composed of twelve consecutive slots may be configured for a transmission UE. For example, three slots 1711, 1712, and 1713 may be configured for transmission of TB A among the MCSt resources, three slots 1721, 1722, and 1723 may be configured for transmission of TB B, three slots 1731, 1732, and 1733 may be configured for transmission of TB C, and three slots 1741, 1742, and 1743 may be configured for transmission of TB D. Meanwhile, the transmission UE may obtain configuration information related to a resource pool in which a PSFCH resource is configured (e.g., SL-ResourcePool) based on an RRC message. For example, the configuration information related to the resource pool may include PSFCH resource configuration information (e.g., SL-PSFCH-Config), and the PSFCH resource configuration information may include information related to a configuration periodicity of the PSFCH resource (e.g., sl-PSFCH-Period) and information related to a minimum time gap between PSSCH and PSFCH (e.g., sl-MinTimeGapPSFCH).

Meanwhile, for example, the transmission UE may perform LBT (type 1 LBT) on a first slot 1711 among the MCSt resources to occupy an idle channel and may transmit TB A to a counterpart UE (and, the UE may perform transmission by performing only type 2 LBT on slots after the first slot). For example, when the counterpart UE succeeds in decoding TB A transmitted on the first slot 1711, the counterpart UE may transfer HARQ feedback (positive ACK) for TB A transmitted on the first slot 1711 to the transmission UE. In this case, for example, when a PSFCH resource is configured every four slots (e.g., sl-PSFCH-Period: 4), and a minimum time gap between PSSCH and PSFCH is configured as three slots (e.g., sl-MinTimeGapPSFCH: 3), the transmission UE may receive HARQ feedback (positive ACK) 1750 for TB A transmitted on the first slot 1711 based on a PSFCH resource included in an eighth slot 1742, which is the earliest slot among slots including a PSFCH resource after three slots from the first slot 1711, not a fourth slot 1741 including a PSFCH resource among the MCSt resources 1700. For example, the transmission UE may determine whether slot(s) for TB A remain after HARQ feedback (positive ACK) 1750 for TB A is received among the MCSt resources 1700 composed of the twelve slots. For example, when slot(s) for TB A remain 1713 after HARQ feedback (positive ACK) 1750 for TB A is received among the MCSt resources 1700 composed of the twelve slots, the UE may not flush a HARQ buffer related to an SL process for transmission of TB A. And, for example, the UE may not clear a grant for transmission of TB A.

For example, if a HARQ buffer related to an SL process for transmission of TB A is flushed or a grant for transmission of TB A is cleared even though slot(s) for TB A remain 1713 after HARQ feedback (positive ACK) 1750 for TB A transmitted on the first slot 1711 is received, a structure of the MCSt resource 1700 composed of the twelve consecutive slots may not be maintained. For example, when a HARQ buffer related to transmission of any one among a plurality of TBs is flushed or a grant is cleared, since a gap between consecutive slots for MCSt exceeds 16usec, a structure of MCSt may no longer be maintained (e.g., in order to perform transmission for remaining TBs, LBT (type 1 LBT) should be performed again first). Therefore, as described above, when the transmission UE determines that slot(s) for TB A remain 1713 after HARQ feedback (positive ACK) 1750 for TB A is received among the MCSt resources 1700 composed of the twelve slots, the UE may not flush a HARQ buffer related to an SL process for transmission of TB A, and may not clear a grant for transmission of TB A.

Meanwhile, the transmission UE may perform retransmission for TB A in a fifth slot 1712. For example, when the counterpart UE succeeds in decoding TB A transmitted on the fifth slot 1712, the counterpart UE may transfer HARQ feedback (positive ACK) for TB A transmitted on the fifth slot 1712 to the transmission UE. In this case, as described above, HARQ feedback (positive ACK) for TB A transmitted on the fifth slot 1712 may be received based on a PSFCH resource included in a twelfth slot 1743, which is the earliest slot among slots including a PSFCH resource after three slots from the fifth slot. In this case, as described above, the transmission UE may determine whether slot(s) for TB A remain after HARQ feedback (positive ACK) for TB A is received among the MCSt resources 1700 composed of the twelve slots. For example, when no slot for TB A remains after HARQ feedback (positive ACK) for TB A transmitted on the fifth slot 1712 is received among the MCSt resources 1700 composed of the twelve slots, the transmission UE may flush a HARQ buffer related to an SL process for transmission of TB A, and may clear a grant for transmission of TB A. In summary, when the transmission UE receives a positive ACK for a TB transmitted on any one slot among consecutive slots for MCSt, except for a case in which slot(s) for the TB remain among the consecutive slots for MCSt, the UE may flush a HARQ buffer related to an SL process for transmission of the TB, and may also clear a grant for transmission of the TB.

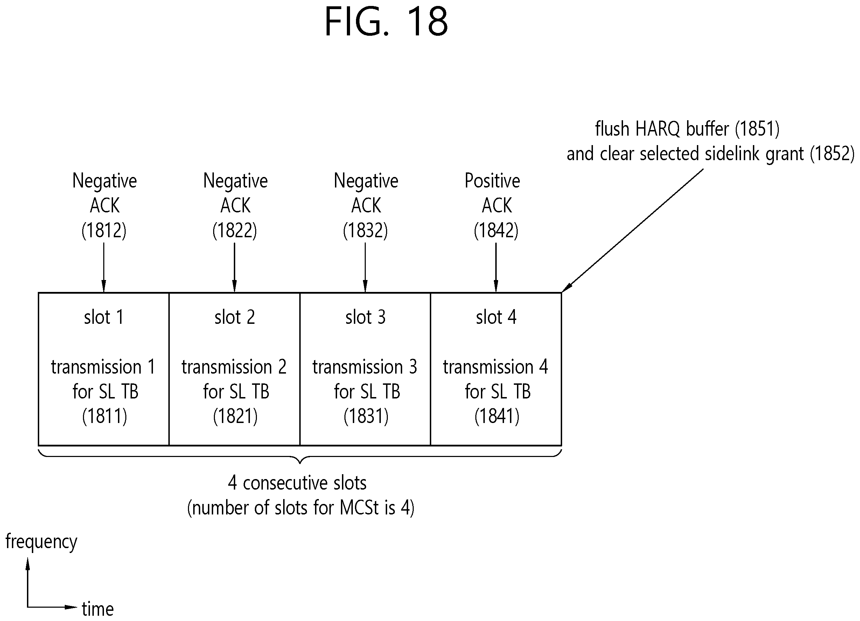

FIG. 18 shows a retransmission operation/HARQ buffer management operation/sidelink grant management operation based on reception of HARQ feedback of a UE when transmitting an MCSt-based SL TB, according to an embodiment of the present disclosure. The embodiment of FIG. 18 may be combined with various embodiments of the present disclosure.

Referring to FIG. 18, when the UE performs MCSt-based SL TB transmission composed of four consecutive slots (when the number of consecutive slots for MCSt is "4") (e.g., performing four transmissions (initial transmission and retransmission) in four slots for one SL TB), when HARQ feedback (e.g., negative ACK) 1812 is received for transmission of a first slot 1811 of MCSt, the UE may transmit a retransmission packet 1821 in a next second slot. And, when HARQ feedback (e.g., negative ACK) 1822 is received for the second slot transmission 1821, the UE may transmit a retransmission packet 1831 in a next third slot. And, when HARQ feedback (e.g., negative ACK) 1832 is received for the third slot transmission 1831, the UE may transmit a retransmission packet 1841 in a next fourth slot. And, when HARQ feedback (e.g., positive ACK) 1842 is received for the fourth slot transmission 1841, the UE may flush 1851 a HARQ buffer related to a sidelink process for SL TB transmission using the MCSt resource, and may perform an operation of clearing 1852 a sidelink grant generated for the SL TB transmission.

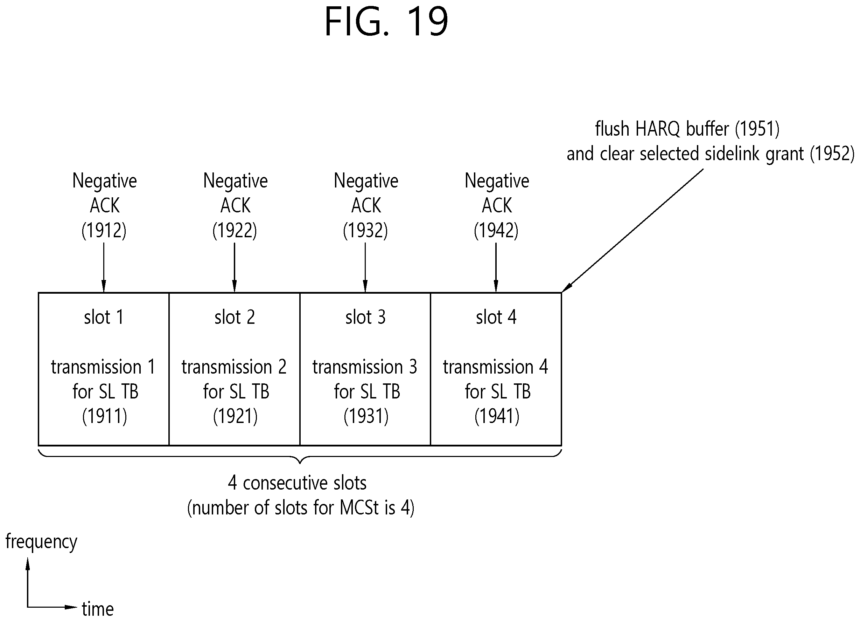

FIG. 19 shows a retransmission operation/HARQ buffer management operation/sidelink grant management operation based on reception of HARQ feedback of a UE when transmitting an MCSt-based SL TB, according to an embodiment of the present disclosure. The embodiment of FIG. 19 may be combined with various embodiments of the present disclosure.

Referring to FIG. 19, when the UE performs MCSt-based SL TB transmission composed of four consecutive slots (when the number of consecutive slots for MCSt is "4") (e.g., performing four transmissions (initial transmission and retransmission) in four slots for one SL TB), when HARQ feedback (e.g., negative ACK) 1912 is received for transmission of a first slot 1911 of MCSt, the UE may transmit a retransmission packet 1921 in a next second slot. And, when HARQ feedback (e.g., negative ACK) 1922 is received for the second slot transmission 1921, the UE may transmit a retransmission packet 1931 in a next third slot. And, when HARQ feedback (e.g., negative ACK) 1932 is received for the third slot transmission 1931, the UE may transmit a retransmission packet 1941 in a next fourth slot. And, when HARQ feedback (e.g., negative ACK) 1942 is received for the fourth slot transmission 1941, the UE may flush 1951 a HARQ buffer related to a sidelink process for SL TB transmission using the MCSt resource, and may perform an operation of clearing 1952 a sidelink grant generated for the SL TB transmission.

The term "channel" described in the present disclosure may be replaced with "carrier" or "a resource block (RB) set of a specific carrier" or "band".

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation).

For example, whether or not the proposed rule of the present disclosure is applied and/or related parameter configuration value(s) may be configured (differently or independently) depending on the activation/deactivation of the Uu Bandwidth part. For example, whether or not the proposed rule of the present disclosure is applied and/or related parameter configuration value(s) may be configured (differently or independently) depending on whether the Sidelink Bandwidth part is activated or deactivated. For example, whether or not the proposed rule of the present disclosure is applied and/or related parameter configuration value(s) may be configured (differently or independently) for a sidelink logical channel/logical channel group (or Uu logical channel or Uu logical channel group). For example, whether or not the proposed rule of the present disclosure is applied and/or related parameter configuration value(s) may be configured (differently or independently) of the initial transmission resource selection. For example, whether or not the proposed rule of the present disclosure is applied and/or related parameter configuration value(s) may be configured (differently or independently) of the retransmission resource selection. For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, when multiple consecutive slots are configured to perform MCSt-based transmission for a plurality of MAC PDU (or multiple TBs), even if a positive ACK for any one of the plurality of MAC PDU transmitted based on any one slot among the multiple consecutive slots is received, if at least one slot for the MAC PDU related to the received positive ACK remains among the multiple consecutive slots, a HARQ buffer related to an SL process for transmission of the MAC PDU may not be flushed, and a grant for the MAC PDU may not be cleared. For example, when a plurality of MAC PDU are transmitted based on MCSt, even if a positive ACK for any one among the plurality of MAC PDU is received, the HARQ buffer may be flushed only when all of the multiple consecutive slots for the MCSt are used, and the grant for the MAC PDU may be cleared. In this case, for example, since the transmission UE may continuously maintain multiple consecutive slot structure (e.g., an MCSt structure) configured to transmit the plurality of MAC PDU, the transmission UE may continuously perform MCSt transmission based on type 2 LBT without additionally performing type 1 LBT for transmission of the remaining MAC PDU. Therefore, since the transmission UE may continue transmission while maintaining the existing MCSt structure, the transmission UE may efficiently use transmission resources of an unlicensed band, and may reduce overhead of the transmission UE that may occur due to performing a new type 1 LBT.

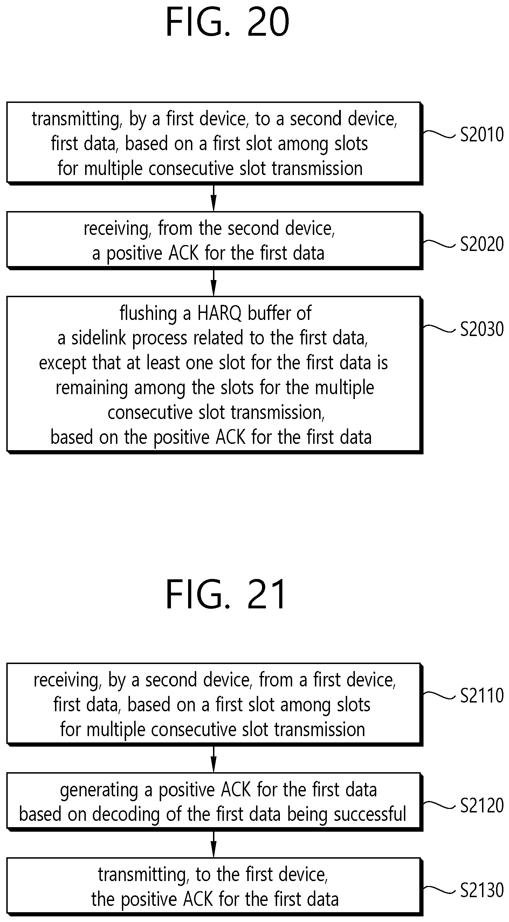

FIG. 20 shows a method for performing wireless communication by a first device, based on an embodiment of the present disclosure. The embodiment of FIG. 20 may be combined with various embodiments of the present disclosure.

Referring to FIG. 20, in step S2010, a first device may transmit, to a second device, first data, based on a first slot among slots for multiple consecutive slot transmission. In step S2020, the first device may receive, from the second device, a positive acknowledgement (ACK) for the first data. In step S2030, the first device may flush a hybrid automatic repeat request (HARQ) buffer of a sidelink process related to the first data, except that at least one slot for the first data is remaining among the slots for the multiple consecutive slot transmission, based on the positive ACK for the first data.

For example, the HARQ buffer may be flushed based on the first slot to which the first data is transmitted being a last slot among the slots for the multiple consecutive slot transmission.

For example, the first data may be included in at least one of a plurality of transport blocks (TBs) or a plurality of medium access control (MAC) protocol data units (PDUs) transmitted based on the multiple consecutive slot transmission.

For example, a time duration performing a sensing to access a resource included in the first slot among the slots for the multiple consecutive slot transmission may be random.

For example, based on accessing to a resource included in the first slot among the slots for the multiple consecutive slot transmission, a channel access to a resource included in a slot after the first slot among the slots may be performed without performing a sensing for a random time duration.

For example, a gap between the slots for the multiple consecutive slot transmission may be less than or equal to a threshold value.

For example, based on all positive ACKs for each of a plurality of data including the first data transmitted based on each slot of the slots for the multiple consecutive slot transmission being received, a grant for each of the plurality of data may be cleared, and sidelink process related to each of the plurality of data may be flushed.

For example, based on the first data being transmitted through a physical sidelink shared channel (PSSCH) in the first slot, the positive ACK may be received on a physical sidelink feedback channel (PSFCH) resource included in a slot after the minimum time gap from the PSSCH among the slots for the multiple consecutive slot transmission.

For example, the multiple consecutive slot transmission for a plurality of data including the first data may be performed, based on a PSFCH resource for the reception of the positive ACK being configured in a resource pool.

For example, the HARQ buffer may be flushed, except that the at least one slot for the first data is remaining after a slot including a PSFCH resource related to the reception of the positive ACK for the first data among the slots for the multiple consecutive slot transmission.

Additionally, for example, the first device may clear a grant for the first data, except that the at least one slot for the first data is remaining among the slots for the multiple consecutive slot transmission, based on the positive ACK for the first data. For example, the grant may be cleared, based on the first slot to which the first data is transmitted being a last slot among the slots for the multiple consecutive slot transmission. For example, the grant may be cleared, except that the at least one slot for the first data is remaining after a slot including a PSFCH resource related to the reception of the positive ACK for the first data among the slots for the multiple consecutive slot transmission.

The proposed method may be applied to devices according to various embodiments of the present disclosure. First, a processor 102 of a first device 100 may control a transceiver 106 to transmit, to a second device, first data, based on a first slot among slots for multiple consecutive slot transmission. And, the processor 102 of the first device 100 may control the transceiver 106 to receive, from the second device, a positive acknowledgement (ACK) for the first data. And, the processor 102 of the first device 100 may flush a hybrid automatic repeat request (HARQ) buffer of a sidelink process related to the first data, except that at least one slot for the first data is remaining among the slots for the multiple consecutive slot transmission, based on the positive ACK for the first data.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

According to one embodiment of the present disclosure, provided is a non-transitory computer-readable storage medium recording instructions. For example, the instructions, based on being executed, cause a first device to perform operations comprising: transmitting, to a second device, first data, based on a first slot among slots for multiple consecutive slot transmission; receiving, from the second device, a positive acknowledgement (ACK) for the first data; and flushing a hybrid automatic repeat request (HARQ) buffer of a sidelink process related to the first data, except that at least one slot for the first data is remaining among the slots for the multiple consecutive slot transmission, based on the positive ACK for the first data.

FIG. 21 shows a method for performing wireless communication by a second device, based on an embodiment of the present disclosure. The embodiment of FIG. 21 may be combined with various embodiments of the present disclosure.

Referring to FIG.21, in step S2110, a second device may receive, from a first device, first data, based on a first slot among slots for multiple consecutive slot transmission. In step S2120, the second device may generate a positive acknowledgement (ACK) for the first data based on decoding of the first data being successful. In step S2130, the second device may transmit, to the first device, the positive ACK for the first data. For example, a hybrid automatic repeat request (HARQ) buffer of a sidelink process related to the first data may be flushed, except that at least one slot for the first data is remaining among the slots for the multiple consecutive slot transmission, based on the positive ACK for the first data, based on the positive ACK for the first data.

The proposed method may be applied to devices according to various embodiments of the present disclosure. First, a processor 202 of a second device 200 may control a transceiver 206 to receive, from a first device, first data, based on a first slot among slots for multiple consecutive slot transmission. And, the processor 202 of the second device 200 may generate a positive acknowledgement (ACK) for the first data based on decoding of the first data being successful. And, the processor 202 of the second device 200 may control the transceiver 206 to transmit, to the first device, the positive ACK for the first data. For example, a hybrid automatic repeat request (HARQ) buffer of a sidelink process related to the first data may be flushed, except that at least one slot for the first data is remaining among the slots for the multiple consecutive slot transmission, based on the positive ACK for the first data, based on the positive ACK for the first data.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: receiving, by a second device, from a first device, first data, based on a first slot among slots for multiple consecutive slot transmission; generating a positive acknowledgement (ACK) for the first data based on decoding of the first data being successful; and transmitting, to the first device, the positive ACK for the first data. For example, a hybrid automatic repeat request (HARQ) buffer of a sidelink process related to the first data may be flushed, except that at least one slot for the first data is remaining among the slots for the multiple consecutive slot transmission, based on the positive ACK for the first data, based on the positive ACK for the first data.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: receiving, by a second device, from a first device, first data, based on a first slot among slots for multiple consecutive slot transmission; generating a positive acknowledgement (ACK) for the first data based on decoding of the first data being successful; and transmitting, to the first device, the positive ACK for the first data. For example, a hybrid automatic repeat request (HARQ) buffer of a sidelink process related to the first data may be flushed, except that at least one slot for the first data is remaining among the slots for the multiple consecutive slot transmission, based on the positive ACK for the first data, based on the positive ACK for the first data.

According to one embodiment of the present disclosure, provided is a non-transitory computer-readable storage medium recording instructions. For example, the instructions, based on being executed, cause a second device to perform operations comprising: receiving, by a second device, from a first device, first data, based on a first slot among slots for multiple consecutive slot transmission; generating a positive acknowledgement (ACK) for the first data based on decoding of the first data being successful; and transmitting, to the first device, the positive ACK for the first data. For example, a hybrid automatic repeat request (HARQ) buffer of a sidelink process related to the first data may be flushed, except that at least one slot for the first data is remaining among the slots for the multiple consecutive slot transmission, based on the positive ACK for the first data, based on the positive ACK for the first data.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

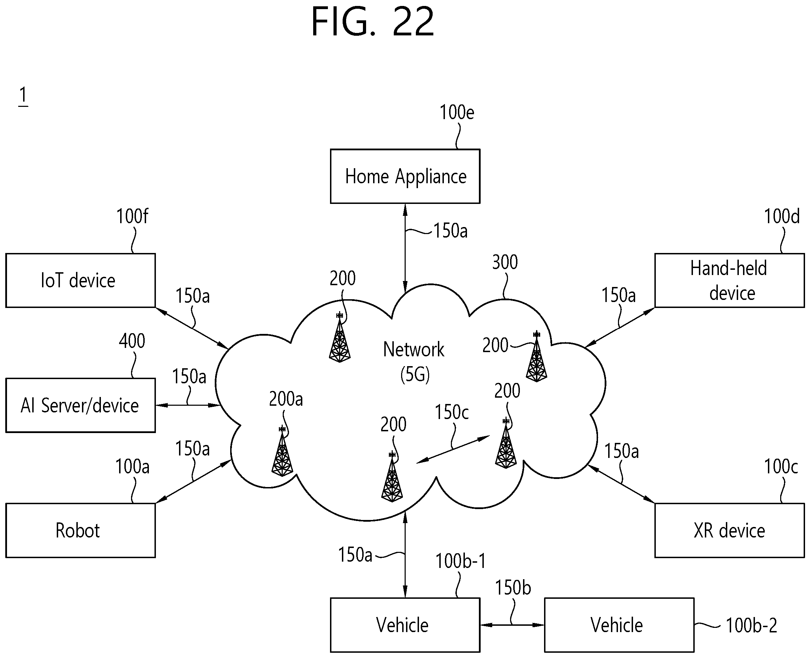

FIG. 22 shows a communication system 1, based on an embodiment of the present disclosure. The embodiment of FIG. 22 may be combined with various embodiments of the present disclosure.

Referring to FIG. 22, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

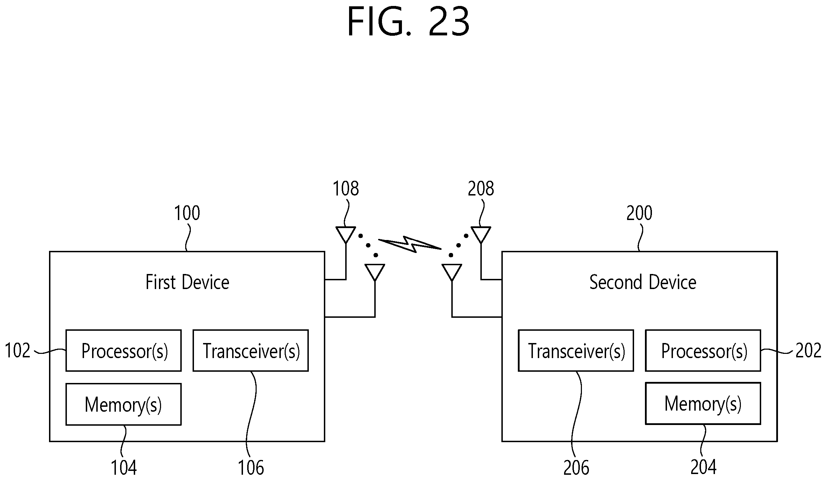

FIG. 23 shows wireless devices, based on an embodiment of the present disclosure. The embodiment of FIG. 23 may be combined with various embodiments of the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

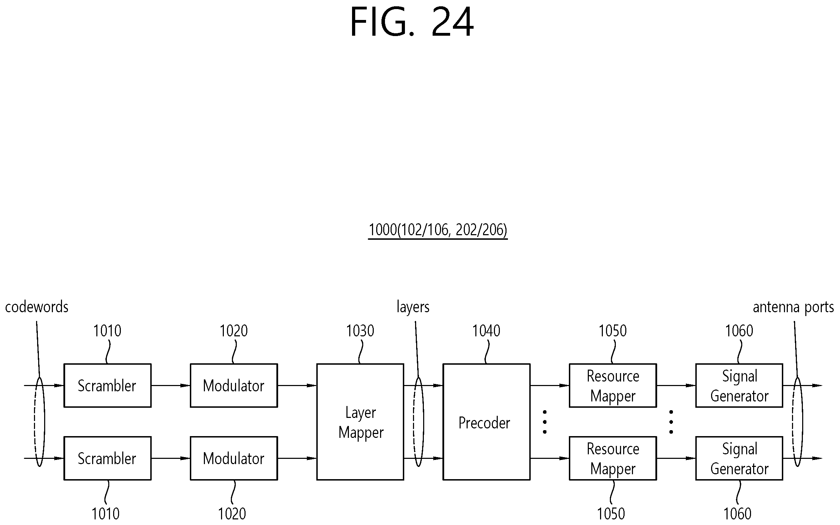

FIG. 24 shows a signal process circuit for a transmission signal, based on an embodiment of the present disclosure. The embodiment of FIG. 24 may be combined with various embodiments of the present disclosure.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 23. Hardware elements of FIG. 24 may be implemented by the processors 102 and 202 and/or the transceivers 106 and 206 of FIG. 23. For example, blocks 1010 to 1060 may be implemented by the processors 102 and 202 of FIG. 23. Alternatively, the blocks 1010 to 1050 may be implemented by the processors 102 and 202 of FIG. 23 and the block 1060 may be implemented by the transceivers 106 and 206 of FIG. 23.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 23) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

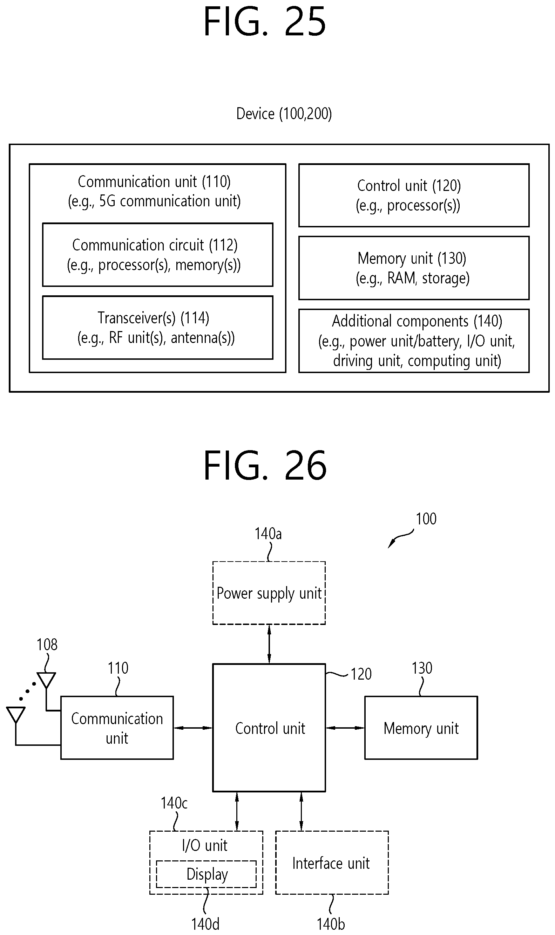

FIG. 25 shows another example of a wireless device, based on an embodiment of the present disclosure. The wireless device may be implemented in various forms according to a use-case/service (refer to FIG. 22). The embodiment of FIG. 25 may be combined with various embodiments of the present disclosure.

Referring to FIG. 25, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

FIG. 26 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 26 may be combined with various embodiments of the present disclosure.

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

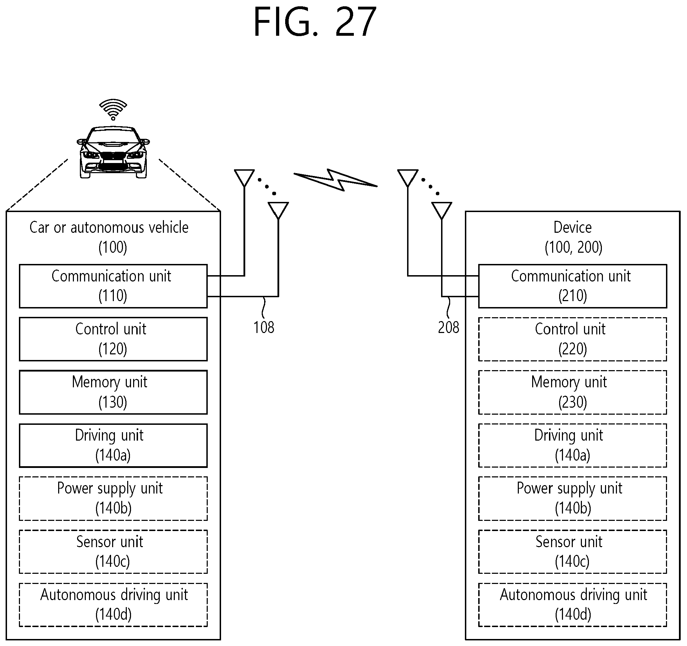

FIG. 27 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 27 may be combined with various embodiments of the present disclosure.

Referring to FIG. 27, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
transmitting, by a first device, to a second device, first data, based on a first slot among slots for multiple consecutive slot transmission;
receiving, from the second device, a positive acknowledgement (ACK) for the first data; and
flushing a hybrid automatic repeat request (HARQ) buffer of a sidelink process related to the first data, except that at least one slot for the first data is remaining among the slots for the multiple consecutive slot transmission, based on the positive ACK for the first data.

2. The method of claim 1,
wherein the HARQ buffer is flushed based on the first slot to which the first data is transmitted being a last slot among the slots for the multiple consecutive slot transmission.

3. The method of claim 1,
wherein the first data is included in at least one of a plurality of transport blocks (TBs) or a plurality of medium access control (MAC) protocol data units (PDUs) transmitted based on the multiple consecutive slot transmission.

4. The method of claim 1,
wherein a time duration performing a sensing to access a resource included in the first slot among the slots for the multiple consecutive slot transmission is random.

5. The method of claim 1,
wherein, based on accessing to a resource included in the first slot among the slots for the multiple consecutive slot transmission, a channel access to a resource included in a slot after the first slot among the slots is performed without performing a sensing for a random time duration.

6. The method of claim 1,
wherein a gap between the slots for the multiple consecutive slot transmission is less than or equal to a threshold value.

7. The method of claim 1,
wherein, based on all positive ACKs for each of a plurality of data including the first data transmitted based on each slot of the slots for the multiple consecutive slot transmission being received, a grant for each of the plurality of data is cleared, and sidelink process related to each of the plurality of data is flushed.

8. The method of claim 1,
wherein, based on the first data being transmitted through a physical sidelink shared channel (PSSCH) in the first slot, the positive ACK is received on a physical sidelink feedback channel (PSFCH) resource included in a slot after the minimum time gap from the PSSCH among the slots for the multiple consecutive slot transmission.

9. The method of claim 1,
wherein the multiple consecutive slot transmission for a plurality of data including the first data is performed, based on a PSFCH resource for the reception of the positive ACK being configured in a resource pool.

10. The method of claim 1,
wherein the HARQ buffer is flushed, except that the at least one slot for the first data is remaining after a slot including a PSFCH resource related to the reception of the positive ACK for the first data among the slots for the multiple consecutive slot transmission.

11. The method of claim 1, further comprising:
clearing a grant for the first data, except that the at least one slot for the first data is remaining among the slots for the multiple consecutive slot transmission, based on the positive ACK for the first data.

12. The method of claim 11,
wherein the grant is cleared, based on the first slot to which the first data is transmitted being a last slot among the slots for the multiple consecutive slot transmission.

13. The method of claim 11,
wherein the grant is cleared, except that the at least one slot for the first data is remaining after a slot including a PSFCH resource related to the reception of the positive ACK for the first data among the slots for the multiple consecutive slot transmission.

14. A first device comprising:
at least one transceiver;
at least one processor; and
at least one memory connected to the at least one processor and storing instructions, wherein the instructions, based on being executed by the at least one processor, cause the first device to perform operations comprising:
transmitting, to a second device, first data, based on a first slot among slots for multiple consecutive slot transmission;
receiving, from the second device, a positive acknowledgement (ACK) for the first data; and
flushing a hybrid automatic repeat request (HARQ) buffer of a sidelink process related to the first data, except that at least one slot for the first data is remaining among the slots for the multiple consecutive slot transmission, based on the positive ACK for the first data.

15. A processing device configured to control a first device, the processing device comprising:
at least one processor; and
at least one memory connected to the at least one processor and storing instructions, wherein the instructions, based on being executed by the at least one processor, cause the first device to perform operations comprising:
transmitting, to a second device, first data, based on a first slot among slots for multiple consecutive slot transmission;
receiving, from the second device, a positive acknowledgement (ACK) for the first data; and
flushing a hybrid automatic repeat request (HARQ) buffer of a sidelink process related to the first data, except that at least one slot for the first data is remaining among the slots for the multiple consecutive slot transmission, based on the positive ACK for the first data.

16. A non-transitory computer-readable storage medium recording instructions, the instruction, when executed, cause a first device to perform operations comprising:
transmitting, to a second device, first data, based on a first slot among slots for multiple consecutive slot transmission;
receiving, from the second device, a positive acknowledgement (ACK) for the first data; and
flushing a hybrid automatic repeat request (HARQ) buffer of a sidelink process related to the first data, except that at least one slot for the first data is remaining among the slots for the multiple consecutive slot transmission, based on the positive ACK for the first data.

17. A method comprising:
receiving, by a second device, from a first device, first data, based on a first slot among slots for multiple consecutive slot transmission;
generating a positive acknowledgement (ACK) for the first data based on decoding of the first data being successful; and
transmitting, to the first device, the positive ACK for the first data,
wherein a hybrid automatic repeat request (HARQ) buffer of a sidelink process related to the first data is flushed, except that at least one slot for the first data is remaining among the slots for the multiple consecutive slot transmission, based on the positive ACK for the first data, based on the positive ACK for the first data.

18. A second device comprising:
at least one transceiver;
at least one processor; and
at least one memory connected to the at least one processor and storing instructions, wherein the instructions, based on being executed by the at least one processor, cause the second device to perform operations comprising:
receiving, from a first device, first data, based on a first slot among slots for multiple consecutive slot transmission;
generating a positive acknowledgement (ACK) for the first data based on decoding of the first data being successful; and transmitting, to the first device, the positive ACK for the first data,
wherein a hybrid automatic repeat request (HARQ) buffer of a sidelink process related to the first data is flushed, except that at least one slot for the first data is remaining among the slots for the multiple consecutive slot transmission, based on the positive ACK for the first data, based on the positive ACK for the first data.

19. A processing device configured to control a second device, the processing device comprising:
at least one processor; and
at least one memory connected to the at least one processor and storing instructions, wherein the instructions, based on being executed by the at least one processor, cause the second device to perform operations comprising:
receiving, from a first device, first data, based on a first slot among slots for multiple consecutive slot transmission;
generating a positive acknowledgement (ACK) for the first data based on decoding of the first data being successful; and
transmitting, to the first device, the positive ACK for the first data,
wherein a hybrid automatic repeat request (HARQ) buffer of a sidelink process related to the first data is flushed, except that at least one slot for the first data is remaining among the slots for the multiple consecutive slot transmission, based on the positive ACK for the first data, based on the positive ACK for the first data.

20. A non-transitory computer-readable storage medium recording instructions, the instruction, when executed, cause a second device to perform operations comprising:
receiving, from a first device, first data, based on a first slot among slots for multiple consecutive slot transmission;
generating a positive acknowledgement (ACK) for the first data based on decoding of the first data being successful; and
transmitting, to the first device, the positive ACK for the first data,
wherein a hybrid automatic repeat request (HARQ) buffer of a sidelink process related to the first data is flushed, except that at least one slot for the first data is remaining among the slots for the multiple consecutive slot transmission, based on the positive ACK for the first data, based on the positive ACK for the first data.
